# EUROPEAN PATENT SPECIFICATION

(11) **EP 1 461 906 B1**
(45) Date of publication and mention of the grant of the patent: **16.07.2008**
(21) Application number: 02779645.7
(22) Date of filing: 28.10.2002
(51) Int. Cl.: H04L 12/28

(54) **COMMUNICATION SYSTEM INCLUDING APPARATUS FOR RECEIVING DATA FROM A PLURALITY OF MEASURING OR CONTROL DEVICES**
KOMMUNIKATIONSSYSTEM MIT EINER VORRICHTUNG ZUM DATENEMPFANG VON EINER VIELZAHL VON MESS- ODER STEUERUNGSVORRICHTUNGEN
SYSTEME DE COMMUNICATION COMPRENANT UN DISPOSITIF POUR RECEVOIR DES DONNEES PROVENANT D'UNE PLURALITE DE DISPOSITIFS DE MESURE OU CONTROLE

(30) Priority: 26.10.2001 GB 0125808
(43) Date of publication of application: 29.09.2004
(73) Proprietor: Qonnectis Group Ltd., Twickenham, Middlesex TW2 5RF (GB)
(72) Inventor: TAPIA, Michael, Anthony, Twickenham, Middlesex TW2 6QL (GB); GADSDEN, Antony, Jonathan, Warmley, Bristol BS30 5JJ (GB); CHURCHILL, John, Victor, Edington, Throop, Dorset BH8 0AE (GB)
(74) Representative: White, Duncan Rohan
(86) International application number: PCT/GB2002/004850
(87) International publication number: WO 2003/036874

(56) References cited:
- EP-A- 0 924 949
- WO-A-01/35190
- GB-A- 2 325 548
- US-A- 5 897 607
- US-B1- 6 178 362
- US-B1- 6 208 266

## Description

The present invention relates to an internet or other network based data communication system, and more particularly, but not exclusively, to a system which allows communications to and from utility meters to be transmitted bi-directionally over the internet or other global computer information network to a remote location.

Information about utility usage is still generally gathered by meter reading personnel attending domestic and business users' premises to read and record a reading from a utility meter (gas, water, electricity and the like).

Prior art documents US5897607A and US6208266 B1 disclose examples of remote data acquisition and processing systems, wherein measurement data is transmitted from meters to a reading processing apparatus, which comprises several modules interconnected by a PC/104 bus.

Automated systems are known, where, for example, the utility meter is provided with a radio transceiver which will transmit its reading upon receiving an interrogation signal from a meter reading device. Such a meter reading device could, for example, be a hand held meter reader, or a transceiver housed in a nearby vehicle.

If utility meters are read manually by personnel "on the ground", this is an expensive method of data acquisition and prone to error. Providing utility meters with a radio transceiver and interrogating those radio transceivers requires expensive modifications to, or a complete replacement of, existing utility meters, and still requires personnel to attend the general area (for example, the street) where the utility meter or meters are to be interrogated.

It is an object of the present invention to mitigate these problems, and to provide an efficient system whereby meter readings may be automatically and reliably taken, with the meter reading information being made available quickly and widely.

The invention concerns an apparatus for receiving data from a plurality of control or measuring devices, according to claim 1. Further embodiments of the invention are covered by dependent claims 2-15.

The invention provides apparatus for receiving data from at least one control or measuring device, comprising, a device interface for communication of data between the apparatus and said device, a central processor for controlling data flow in the apparatus, and an input/ output interface for communicating with an external communications network, whereby information from one or more devices can be communicated to a central data distribution network.

The devices may be selected from the group consisting of utility meters, sensors, valves, storage tanks, environmental control devices, and retail terminals for taking purchase orders.

The input/output interface may be selected from the group consisting of, a modem, a PSTN or ISDN interface, a GSM interface, or short range radio or satellite interfaces.

The device interface, central processor and input/output interface are each contained in separate modules occupying slots in a modular system. The modules preferably communicate via a single bus. Each module is preferably object orientated and encapsulates the processing and electrical interfaces of the required function. Each module occupies a data address in a given address range and the central processor dynamically allocates addresses to provide virtual slots in a modular system.

The device interface may be adapted to interface with a plurality of devices of the same type.

The apparatus may include a plurality of interface modules which may interface with the same or different types of devices.

The invention also provides data processing apparatus connected to the internet or other communications network and in communication thereby with a plurality of measuring or control devices, the apparatus including a first database for storing information received from said devices, a second database including information identifying a plurality of clients or end users, wherein the data processing apparatus manages communication of data to a client from one or more of said devices.

The data processing apparatus manages communication of data between a client and a device, whereby on the provision of a device identifier by a client or end user, the apparatus allows interrogation of the identified device or for data to be passed thereto.

The data may be control data for an actuator or control device.

According to one aspect of the present invention, there is provided apparatus for allowing communication between a first device and a second device, including a intermediary device, means for communicating data between the first device and the intermediary device via the internet, and means for communicating data between the second device and the intermediary device via the internet.

The system effectively "internet enables" devices so that 2-way communication can be established with a wide range of devices, through a wide range of information communication technologies and media, which can be addressed using standard internet technologies. This approach allows a mixture of technologies to be used to pipe information between a scalable number and nature of devices that are widely geographically dispersed. The system is cost effective because existing information communication technologies and gateways are used, removing the need for bespoke data centres.

According to another aspect of the present invention, there is provided apparatus for communicating with a device requiring a first predetermined data form, including data processing means for processing data having a second predetermined form, conversion means for converting the data between the second predetermined data form and the first predetermined data form, such that the data processing means can communicate with the device. Such an arrangement allows the device to be of a standardised form, the conversion means performing translation of the external data into a suitable form for the device to receive.

For a better understanding of the present invention, specific embodiments will now be described, by way of example, with reference to the accompanying drawings, in which:
Figure 1 shows an overview of the entire system;
Figure 2 shows a practical implementation of components of the system;
Figure 3 shows the components of the node module;
Figure 4 shows elements of a database application;
Figure 5 is block diagram or the various inputs and outputs to components of the invention;
Figures 6 and 7 show various operations performed by the central server.

The embodiment described relates to a utility meter reading system. However, the system is connectable to any devices requiring communication of data, such as valves, sensors, control equipment, storage tanks, retail terminals for taking purchase orders, etc.

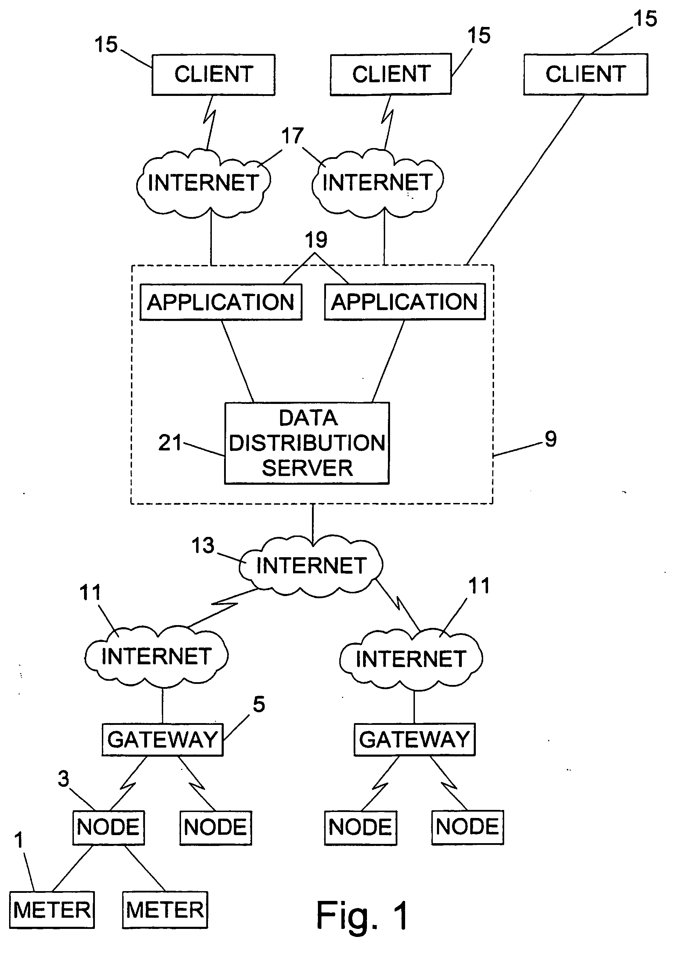

Figure 1 shows an overview of the entire system. A utility meter 1 measures the supply of a utility, such as water, for example, in a user's home. This meter 1, together with a plurality of other meters, is connected to a node module 3. The node module 3 includes a facility to communicate with a gateway module 5. The communication between the node module 3 and the gateway module 5 may be by PSTN or ISDN fixed land telephone line, GSM mobile communication network, radio communication, or by any other suitable conventional communication means, using known protocols. A plurality of different node modules 3 will be connected to each gateway module 5.

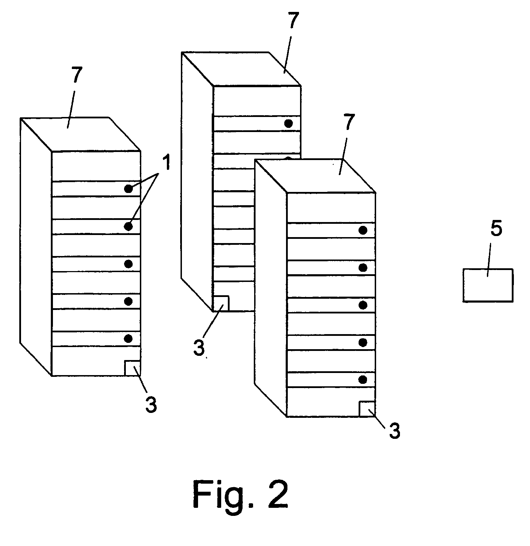

Figure 2 shows an example of how the components thus far described might be deployed in a practical implementation. In this example, a single gateway module 5 is provided for a university campus. Each apartment block 7 on the university campus is provided with a node module 3. In each apartment block 7, each dwelling is provided with one or more utility meters 1. Each utility meter 1 in a given apartment block 7 is connected to the node module 3, typically by conventional electrical cabling, although known wireless connection methods could be used. The node module 3 collects and processes data from each of the meters 1 to which it is connected. Communication between each node module 3 and the gateway 5 is provided for, as mentioned above, by the fixed telephone network or any suitable wireless network. Assuming that the communication method between each node module and the gateway 5 operates on a "pay per use" basis, it will be advantageous if the gateway 5 is positioned in proximity to the plurality of node modules 3 in order that, for example, telephone calls between the respective components can be made at a "local" (i.e. relatively inexpensive) call rate.

The data communicated between the gateway 5, node module 3 and meter 1 will, generally speaking, comprise meter reading data transmitted "up" the system from the meter 1 and meter reading requests transmitted "down" the system from gateway 5.

A central server 9 is provided at a remote location. The central server 9 transmits commands to and receives data from a plurality of respective gateways 5, each of which is connected to a plurality of respective node modules 3, which in turn are connected to a plurality of respective meters 1. These gateways 5 could be dispersed throughout a city, a country, or indeed throughout the world. Communication between the gateway modules 5 and the central server 9 is performed using the medium of the internet. If the gateway 5 wishes to communicate with the central server, a connection is made to the internet typically using the public fixed telephone network. Data is communicated to and received from the central server 9 via a further internet connection. Communication between the central server 9 and the gateway 5 may be initiated by either of these components of the system.

It is advantageous for communication between the central server and the gateway 5 to be made using the internet. Firstly, the internet is a communications medium which is well established. No new communications infrastructure is required to allow communication between the central server 9 and the gateway 5. Also, the use of the internet reduces communications costs. For example, in many countries, there are a number of internet service providers which can be accessed by making a telephone call at a "local" (i.e. relatively inexpensive) call rate. Therefore, data transmission between the central server 9 and the gateway 5 can be performed at a local call rate even if those system components are located in different countries.

It should be understood that the internet is the preferred global communication information network. However, any large-scale computer information network may be used, either public or non-public. Although the word "global" is used in the specification, it should be understood that the network need not cover the entire world, but may be distributed over a large area, or could, for example, be a local area network.

A client 15 might be operated by an end user (for example, a person residing in one of the apartment blocks 7) or a utility company wishing to monitor usage. The client 15 comprises a conventional PC running a known internet browser program. Connection between respective clients 15 and the central server 9 is via the internet 17 (this means of communication having the advantages referred to above). This allows access to a plurality of applications 19 run by the central server 9. For example, an application 19 provided for an end user client 15 might be a display of their meter reading, a history of utility usage or an up-to-date indication of the cost of utility consumption for their particular meter 1. Alternatively a client 15' can be connected directly to the central server 9.

Data distribution server 21 manages the communication of data between the applications 19 and the meters 1. The data distribution server 21 includes a look-up table that will, for a given meter identifier provided by a client 15 to the relevant application 19, provide data allowing that particular meter to be identified and interrogated.

Components of the system shown in Figure 1 will now be described in more detail.

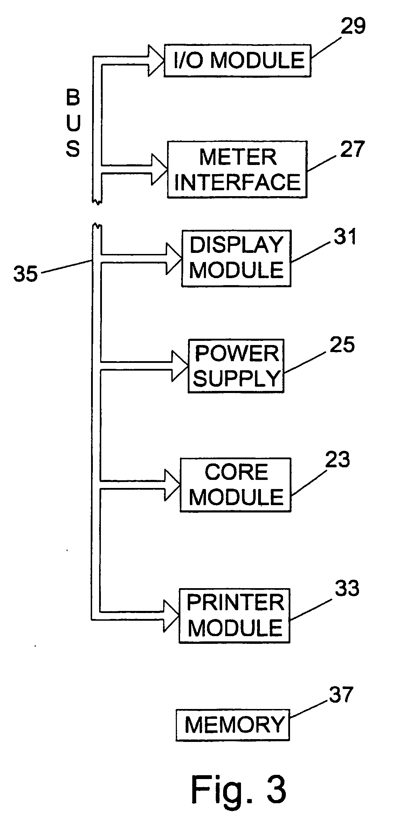

Figure 3 shows schematically the structure of the node module 3. The node 3 comprises a plurality of separate modules. A core module 23 provides overall control of the node 3. One or more power supply modules 25 provides a source of power for the node 3. One or more meter interface modules 27 provides direct connection to a utility meter. An input/output module 29 provides connectivity to the gateway 5. A memory module 37 is also provided. An optional display module 31 may be provided having an LCD display for displaying information to a user. An optional printer module 33 may be provided to give a hard copy output of data. The various modules of the node 3 are connected by a bus 35.

The node 3 is a modular system - components of the system are encapsulated in modules, so that each module fulfils one function for the system. The node system 3 is highly object orientated - each module (or object) in the system encapsulates processing and electrical interfaces so that it carries out the function required. An example of this is that each module regulates its own power rails, so that the node system 3 does not need to know what voltage levels an individual module requires for its internal operation. Each module also presents a well defined and simple interface to the rest of the node system 3 so that, for example, the node system 3 as a whole does not need to know how to write a display module 31, only the LCD display module 31 needs to know these details.

The 'stack' of modules can be plugged together in any order, as they all communicate via the common data bus 35 with common connectors. Power distribution is also handled through these connectors. Each module hides (or encapsulates) technical details that are only relevant to that particular module, so that the other modules in the system do not need to control or oversee the behaviour of the module. Each module therefore encapsulates its functionality so that a simple and well-defined interface is presented to the other modules within the mode system 3.

The bus 35 connects the modules in the node system 3 together, providing information flow between modules and current for each module.

There is an arbitrary limit in this embodiment of 32 meter interface modules 27, which will ensure that the core module 23 has sufficient resources to keep track of the serial numbers and types of the meter interface modules 27 plugged into the node system 3. It should be noted that a meter interface module 27 may itself interface to many meters, for example.

Any number of power supply modules 25 may be plugged into the node system 3. The more modules used, the longer the time before replacement power supply modules 25 are required. The power supply modules 25 may comprise cells (batteries). A battery life of 10 years or more is preferred. The battery may be recharged by power from the PSTN connection made by the I/O module 29. Whether power is provided by the battery and/or the PSTN connection, the node module 3 is designed to consume very little power, especially very little current. Mains power could alternatively be used.

The modules may be "hot socketed", i.e. the node system 3 need not be powered down when adding or removing modules. There may be data corruption on the bus 35 during hot socketing, but a bit validation and message checksum procedure will ensure that corrupted messages are rejected.

The bus 35 is of the present embodiment uses I2C technology. This has the following advantages:
1. Minimum number of signal lines;
2. Open collector data and clock lines, approx 0µA inactive current;
3. Supported as a hardware module on most microprocessor families;
4. Built in Schmitt triggering and filtering;
5. Reduced software overhead;
6. Addressing ability built in;
7. Multi master, multi drop;
8. Supports varying data speeds, making a mix of 'fast' and 'slow' modules feasible;
9. Standard plug in for memory, making memory 'buckets' straightforward;

The data and clock lines of the bus 35 sink 350µA in normal operation, when active, giving a maximum line length of 10m. If longer line lengths are required then either an extender module or a repeater module must be used. Clock frequencies are determined by the state of the FSEL line on the bus:
- FSEL high : I2C clock frequency up to 100kHz
- FSEL low: I2C clock frequency up to 10kHz

A set of eight module select lines are provided, SL0 to SL7 in this embodiment. These are under control of the core module 23, and used to enable groups of modules. Each type of module will respond to one of these lines, or individual modules within a type group could be made to respond to different select lines (for example, each of a plurality of meter interfaces 27 respond to respective select lines).

The module select lines will enable groups of modules when high, and disable them when low. Modules that are not selected are expected to enter a power down state that consumes ultra low amounts of current (ideally less than 2µA). Preferably, power supply integrated circuits are provided on each module which can shut down the data module to within one micro amp, such as the MAX8 or maxim MAX8881.

The power rail is distributed to the modules as a rectified and smoothed raw voltage rail, nominally +9.0V. No regulated rail is supplied, so that all modules must locally regulate their own internal voltage rails. This localised regulation is used because:
1. The modules regulate only the current required for their operation.
2. Modules that 'understand' how much regulation they require conform to the object oriented principle of the mode system 3.
3. Individual modules can be powered down to save current.
4. The bulk current supply (the raw battery supply from the power supply modules 25) can be fed from long lines without degradation in performance, as the local power regulation will provide built in reverse voltage protection, over voltage protection and close tolerance regulation.

The core module processor may comprise a Hitachi H8/3664 microcontroller and a 12C EEPROM memory. The EEPROM stores data such as dial-out PSTN numbers. The core module provides processing power to control the other modules and formatting of the data for onward communication to the gateway 5.

The core module operating system provides a real time executive, which takes the form of a prioritised round robin scheduler that adapts to task loading. The software developer can choose the priorities of the applications tasks, and methods are supplied that allow tasks to call upon extra processing power under heavy usage.

The operating system may provide basic hardware services, for example, in the form of:
1. Sounder support
2. Keypad scanning and key press recognition
3. LCD and Backlight support
4. Printer functions
5. Serial communications functions
6. Modem communications
7. I/O expansion handling

The operating system has optional networking sub-systems that can be used in networks and inter-networks, such as:
1. TCP/IP/PPP internet protocol
2. Wide Area Network protocol

The operating system provides a round robin executive that has 5 levels of priority. This is implemented as a set of 5 API functions called from the executive, each with a different repetition period. In addition, the application programmer can request that an application program interface (API) function be called again immediately if it is decided that more processing power is required for these tasks. The 5 API functions that make up the round robin are in an embodiment:

| | |
|---|---|
| Executive Call | Period between calls |
| Do_faster_tasks | 64ms |
| Do_fast_tasks | 128ms |
| Do_medium_tasks | 256ms |
| Do_slow_tasks | 512ms |
| Do_slower_tasks | 1.024s |

The application programmer decides which application tasks should be called with a particular frequency, and then adds calls to these tasks into the specific executive call.

Note that the executive calls are too slow to service a network sub-system, and so as a special case network services are carried out every 8ms.

In addition to the round robin executive, a start-up initialisation API is provided so that the application can be initialised before any of the executive calls are made.

There may be circumstances where a module needs to attract the attention of the core module 23. The I2C bus multi-master technology allows the module to initiate a dialog with the core module 23, providing a system interrupt. This is not a hardware interrupt, and so the core module 23 can choose to ignore the signal from the module.

The bus 35 can be extended to run over long line lengths (up to 60m). To do this, extra current must be used to drive the I2C clock and data lines. This is provided by an extender module, which provides:
1. Current to drive the information bus up to 60m
2. Mechanical strain relief
3. Twisted pair cabling

The extender module is not a repeater module as such, providing only extra drive and mechanical capability and does not provide electrical isolation or reshaping of signals.

The node system 3 can be configured (or diagnostic actions performed) via some external equipment, for example a PC. An adapter module is connected to the core 23 module via the bus 35. This adapter module converts the information bus into RS232 signals, which can be read via the com port on the PC. In addition, the PC can send messages onto the bus 35, allowing configuration and interrogation of the mode system 35.

The adapter module is in the form of two sections:
1. Commercially available RS232 to I2C converter, PCCOM-I2C, which can be used by the PC running MITE-Com communications software
2. Custom designed module which routes the I2C node system 3 signals to the PCCOM-I2C connector.

A facility may be provided to remotely reprogram the application program memory area via the I/O module 29.

The bus 35 has the following connections:

| **Pin number** | **Signal Name** | **Description** | **Type** |
|---|---|---|---|
| 1,3 | GND | System power rail return | Power ground |
| 2,4 | VRAW | System power rail | Power |
| 5 | SDA | Serial I2C data | Open collector |
| 6 | SCL | Serial I2C clock | Open collector |
| 7 | FSEL | I2C clock frequency select | Open collector |
| 8 - 15 | SL0 - SL7 | Module select lines | Push - pull |

The addressing of a message and its length is in accordance with by the I2C protocol. The body of the message is then given the following structure:

| **Byte** | **Description** |
|---|---|
| 0 to 3 | Serial number of originating module |
| 4 | Register number |
| 5 to n-1 | Register value |
| N | 8 bit cyclic redundancy checksum according to "x^8 + x^2 + |
| | x+1" |

If the register value is 0 bytes long, then the command is interpreted as a request for the register value, otherwise the register is loaded with the given register value.

The command messages take the form of register values to be loaded or to be read back. Register values are specific to the type of module, but the first three register values are mandatory for all modules. The mandatory registers are:

| **Register** | **Bytes** | **Description** |
|---|---|---|
| 0 | 4 | Serial number of interface module |
| 1 | 1 | Type of interface module |
| 2 | 1 | I2C address for interface module |

In practice register 0, the serial number, can always be inferred from the reply given by an interface module.

For example, if the core module 23 wished to find the type and serial number of a meter interface module 27, it would send the following command:

| **Byte** | **Value** | **Description** |
|---|---|---|
| 0 to 3 | nnnn | Serial number of core module 23(nnnn) |
| 4 | 1 | Register number for module type |
| 5 | CS | 8 bit cyclic redundancy checksum |

The meter interface module 27 would respond with:

| **Byte** | **Value** | **Description** |
|---|---|---|
| 0 to 3 | dddd | Serial number of data module (dddd) |
| 4 | 1 | Register number for module type |
| 5 | 160 | Type of data module (for example 'A0h') |
| 6 | CS | 8 bit cyclic redundancy checksum |

As another example, if the core module 23 wished to set the I2C address of the interface module to the escape address (hex 40) it would send the following command:

| **Byte** | **Value** | **Description** |
|---|---|---|
| 0 to 3 | nnnn | Serial number of core module 23 (nnnn) |
| 4 | 2 | Register number for I2C address |
| 5 | 70 | I2C address value |
| 6 | CS | 8 bit cyclic redundancy checksum |

The interface module would not need to acknowledge the command, as this had been done by the I2C protocol itself. If for any reason the interface module could not carry out the command, then it would query the register that should have been set by using:

| **Byte** | **Value** | **Description** |
|---|---|---|
| 0 to 3 | dddd | Serial number of interface module (dddd) |
| 4 | 2 | Register number for I2C address |
| 5 | CS | 8 bit cyclic redundancy checksum |

Which would be interpreted as a request for a value for the specified interface module register.

The addressing scheme deals with the problem of assigning I2C addresses to the modules that are plugged into a node system 3. There are 121 available addresses in 7 bit I2C addressing mode. This allows enough addresses for the purposes of the node system 3, limited arbitrarily to 32 interface modules 27. Each module plugged into the system must be assigned one of these 32 addresses. Modules cannot have a fixed I2C address - otherwise two or more modules may have the same I2C address, and therefore could not be distinguishable to the rest of the system.

All modules respond to the general call address of hex 00. The normal address range for interface modules will be the 32 addresses from hex 20 to 3F.

The primary core module 23 has a fixed address of hex 1F. This means that there can only be one primary core module 23 in any one node system 3. There may be secondary core modules using fixed addresses 1C to 1E.

Addresses hex 50 to 57 are reserved for directly addressable non-volatile memory, typically provided by a memory module 37. Note that other forms of non-volatile memory modules may be present, but that they will be assigned an address in the normal address range for data modules.

Address hex 40 is used as an 'escape' address, which is assigned to interface modules if the core module 23 can not assign an address in the normal range, or is assumed by interface modules if the core module does not assign a valid address (for any reason). It is also used during the arbitration phase of the address resolution process.

Address resolution is under the control of the core module 23. It can be carried out at any time according to the application, but will typically be carried out on power up reset of the core module. The process is as follows:
1. Core module enables all modules by making SL0 to SL7 active
2. Core module sends a command to the general call address (hex 00) for all modules to change I2C address to the escape address (hex 40 in this case).
3. Core module sends a command to the escape address (hex 40) for the modules to identify themselves.
4. The modules send back an identification reply, consisting of their serial number and type. As all modules respond at once, then the inherent I2C arbitration will allow only one module to get through at any one time.
5. Modules that are blocked from sending back the identification reply will retry.
6. Eventually all modules will have replied.
7. Core module waits for a time out period (since last identification reply received) to ensure all modules have replied.
8. Core module assigns I2C addresses to modules by sending the change address command, which contains a serial number and I2C address pair.
9. As each module recognises its own serial number in the change address command, so it will change its I2C address to the new value.
10. Any modules that do not get a valid address change command will then stay at the escape I2C address (hex 40).
11. Core module sets enable lines SL0 to SL7 to states applicable for application

The arbitration phase will finish with the modules at the required addresses, and the core module will have a table of the 32 possible I2C addresses, populated with the serial number and type of the module at that address (if any).

Normally, as mentioned above, modules may be inserted or removed from the node system 3 without powering down the system. This means that the address resolution during power up reset of the core module 23 will not detect insertion or removal of modules.

A distinction has to be made between modules of an active type used by the application, and modules not used by the application and therefore not active. For example, if a node system 3 is used exclusively for meter reading, it may be possible for a display module 31 to be included in the system but never used. In this case the module select line for display modules 31 will never be active, and the display module 31 is an unused type.

Therefore the following cases need to be catered for:
1. Insertion of module of an active type, and with an I2C address same as an existing module
2. Insertion of module of an active type with different I2C address from existing modules in system
3. Insertion of module of an unused type, with arbitrary I2C address
4. Removal of an active type module
5. Removal of a module type that is not used

### 1. Insert Active Type Module - Same Address

This condition would be detected if the new module were to reply to a command instead of the existing data module. In this case, the serial number would not match that in the I2C address table, and so the address resolution process would be carried out to ensure all addresses are properly assigned.

In the case where the new data module does not reply to a command to the existing module - because it loses out in bus arbitration - then it would normally try to resend the data. The core module 23 would receive this extra reply (with an incorrect serial number / address pair) and so will carry out the address resolution process.

### 2. Insert Active Type Module - Different Address

As the core module 23 would have no entry in the 12C address table corresponding to this address, then the new data module would not normally be addressed. It is then up to the module itself to decide to identify itself to the core module 23, or to wait for the address resolution process to be carried out (if ever).

### 3. Insert Unused Type Module

As this is an unused module type the condition would not be detected, and would not make a difference to the running of the application. If for any reason the address resolution process was carried out, then it would be assigned an address.

### 4. Remove Active Type Module

This will be detected when the core module 23 tries to read the module, and if it did not respond to repeated information requests the entry in the I2C address table would be removed, or the address resolution process carried out.

### 5. Remove Unused Type Module

As this is an unused module type the condition would not be detected, and should not make a difference to the running of the application. However, this condition may impact the running of the application, in that it is occupying a location in the I2C address table.

However, if the node system 3 were to run out of addresses, due to active data modules being added, then the address resolution process would be carried out, and the entry in the I2C address table would then be removed.

The meter interface module 27 will now be discussed. The meter interface module 27 provides the electrical interface to allow the node system 3 to read a variety of electricity, water and gas meters. The meter interface module 27 encapsulates the technical requirements for each type of meter to present a consistent interface to the rest of the system so that the rest of the mode system 3 will not 'know' what meter type is attached, but only that it needs to read information from the meter interface module 27 for interfacing to the meter in a way that is understood by the meter interface module 27 only.

The interface module 27 allows external control of the signal lines to a meter appliance, for example to allow remote control of the meter by a client 15. The interface module 27 can preferably interface with at least two individual meter appliances preferably at least 4 appliances.

Each meter interface has a programmable identification number.

An electrical signal from the utility meter 1 would generally be in the form of a pulsed output, for example from a reed relay switch, the pulse signal being indicative of the consumption of water, electricity, gas or the like. For example, in the case of a known water meter, three electrical connections are made between the interface 27 and the meter 1. Power/clock lines supply power to the meter register and also act as a clock to control the data output rate. A data line is an open collector interface to obtain serial data from the meter. Data transmitted from the meter register may be in one of two known basic formats: fixed length message format or variable length message format. The format of data from the known meters, and the method of extracting this data from known meters will be known to the skilled in the art and will not be discussed further here.

The interface module 27 will provide protection so that if the bus power rails are reversed, or if they are over voltage, then no damage will be suffered by the interface module. The interface module need not function under these conditions, but shall function once the power connection fault is rectified.

Although a meter interface module 27 has been described, a module may be configured to connect to different devices, such as such as valves, sensors, control equipment, storage tanks, retail terminals for taking purchase orders, etc. Due to the modular nature of the node system 3, the other modules will not need to be altered. As well as reading information from the devices the interface module 27 allows remote control of the devices.

The interface module 27 processor should be either a Microchip PIC, National Semi-conductor COP8 or an SGSST7 family processor.

The I/O module 29 provides a public service telephone network (PSTN) physical communication layer between the node module 3 and the gateway 5 for example, in the form of TCP/IP/PPP packets or data packets or some other known communication methods to allow meter data to be transmitted and received.

The data is then transmitted by the gateway 5 to the data distribution server 21 via the internet 11. The function of the data distribution server (DDS) 21 is essentially to ensure that data passing between the applications 19 and the gateways 5 (and onward to the meters 1) is correctly routed and arrives at the desired location. The DDS manages the movement of transactional data through the system and handles areas such as queue management and system gateway management. The DDS allows each node 3 to be uniquely identified in the system.

The DDS allows the sub-addressing for all devices. The system therefore has a hierarchical addressing structure that is managed by the DDS.

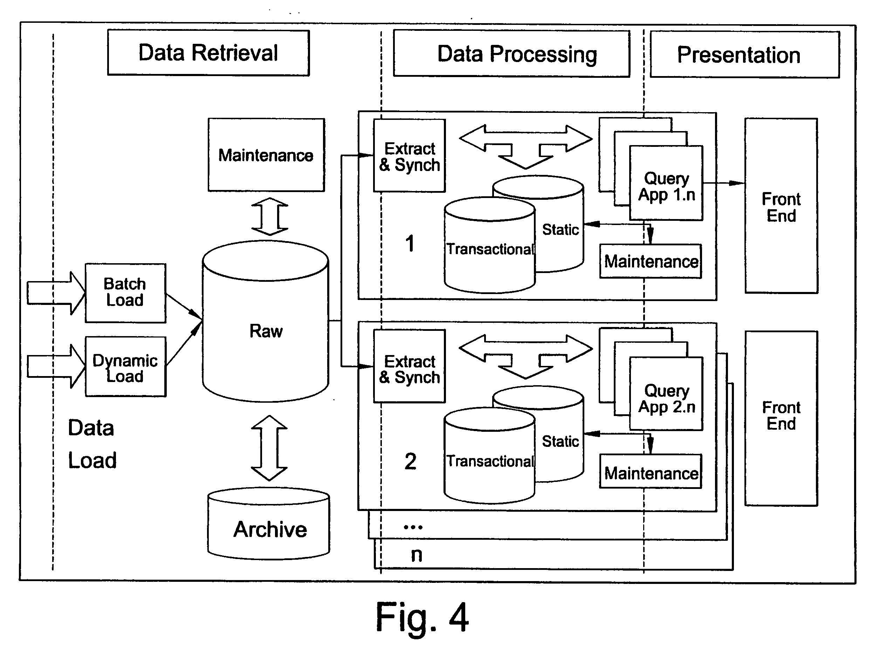

Elements of the metering database application 19 are shown in more detail in Figure 4. The key tasks performed are:-

### Data Retrieval

This involves the importing of raw data into the system through the Data Load interface and storing the data in the Raw database.

### Data Processing

This section involves the extraction and interpretation of the Raw data into processed transactional data modules using standing parameters stored in the Static database.

### Presentation

This section involves the query interfaces to the processed transactional database and the export or presentation of the results through a front-end such as a website.

### DATA RETRIEVAL

### Data Load

There are two data load interfaces available that are responsible for importing the data into the Raw database:
1. Dynamic
2. Batch

The Dynamic Interface will be implemented as one of the Server's Application Listeners, directly activated by the data distribution server (DDS) 21. It will be passed data by the DDS 21 and will place the data in the Raw database using a direct mechanism such as TCP/IP SQL *Net.

The Batch Interface will be a Data Load using a mechanism such as SQL *Loader. This will extract Raw data from within structured files that are FTP transferred to an available directory in the central server 9. The format, content and structure of the files will be compliant with that expected by the Data Load interface.

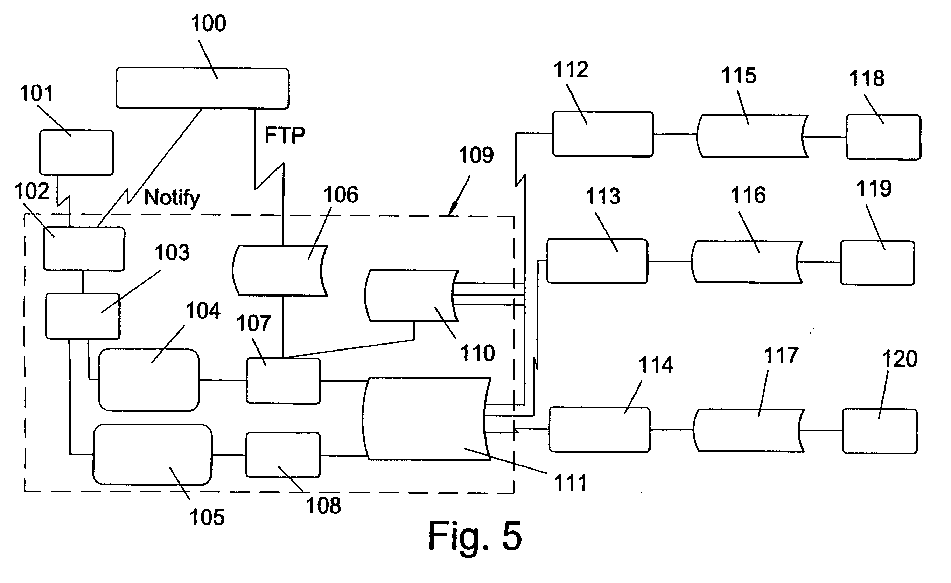

Figure 5 is a block diagram of the Data Distribution Server, database, inputs, outputs and applications. Most of the raw data will be provided via the internet from external gateways 101 in a TCP/IP formats and are received by a gateway handler 102 which provides the information to the Data Distribution Server 103. The system may also have access to third party data through a batch export provider 100 in FTP which is stored in Batch Import Data File 106. When batch data is transferred to the Batch Import Data File 106 a notification is sent to the Gateway Handler 102. On notification of a batch data import the DDS 103 initiates via Batch data Load Listener 104a batch data load 107. The batch data is sorted into dynamic and static data which is transferred to static data file 110 and raw data file 111 respectively. A dynamic data load listener 105 initiates a dynamic data load 108 for transfer of raw data to data file 111.

In the embodiment of figure 5, three Applications, 118, 119 and 120 have access to the raw and static data files 110 and 111 via data extractors 112, 113 and 114. The data required or demanded through application 118, 119, and 120 is extracted from the respective data store and transferred to extracted data stores 115, 116 and 117 for each Application 118, 119 and 120.

The Dynamic Interface 101, 102 will be for Meter Data collected through the servers from a remote node device 3.

### Raw Database

The required underlying database technology may be Oracle.

In the Raw Database Data model the raw data is unstructured and unprocessed.

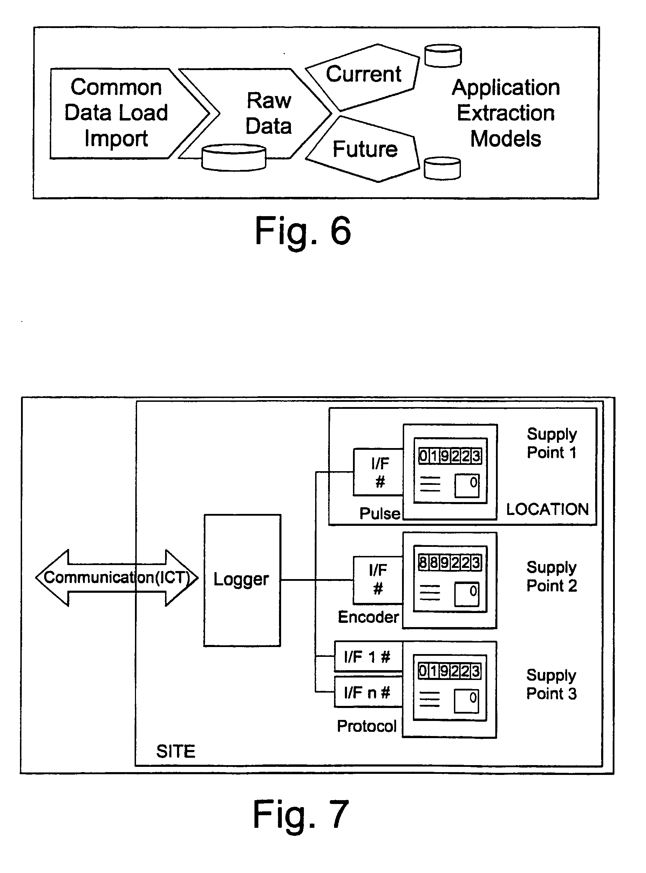

### (See Figure 6)

The raw data will not actually mean much until it has been processed. The proposed basic structure for the raw data is:

| Field | Type | |
|---|---|---|
| DataSowceID | | Variable Length Text |
| Data | Variable Length Binary | |
| Timestamp | | Date & Time |

The DataSourceID identifies the source and type of data and is used as the reference for the Processing interfaces. The structure of this could be the ID of node 3 combined with the sub-address of the downstream module in the node system 3 and also combined with the register name of the data (such as accumulated reading). Data from the Batch Import will also end up in the Raw Database, where its individual items of data will also be identified by a specific DataSourceID.

### Archive

A Data Archive may be kept available on-line for 2 years and off-line for a further 10 years. An interim archive solution may be implemented whereby data is summarised on a regular basis. The detail may be archived but the summary is retained to enable some plots to span many years:
Y, Y-1 we keep all the readings
Y-2 to Y-5 we sum the readings to keep only one per month, alarms are removed
Y-6 + we sum the readings to keep only one per year

### Maintenance

There is a basic maintenance interface that can be used by a system administrator to maintain and support the system. Administration reports are available through this interface.

### Inbound and Outbound Retrieval Models

The following explains the different data retrieval models that could be implemented. Whichever model is implemented should be supported by the system i.e. the static data for the Meter Reading Application should contain all of the necessary details.
(a) Inbound - this is where a device calls in to the server at a pre-determined time. If the server is busy then the device will keep retrying during a pre-defined "window" of time, possibly to different "fall-back" numbers. This data is then made available to load into the system through the data load interface.
(b) Outbound - a "billing cycle" or group of devices or meters are called ("polled") by the server during a "window" as defined as part of that cycle. This data is then made available to load into the system through the data load interface.
(c) Demand reading - the process by which a reading, or reading(s), are obtained as instantly as the system permits or on request by the user.

### DATA PROCESSING

Raw data will have different processing requirements according to the application for which it is destined. The following describes the generic core.

Any analysis that is required is also done at this stage e.g. comparisons that may result in alarms being generated, the calculation of virtual meters or data derived from the raw data.

### Transactional Database

The data will then be stored in a Processed Transactional database ready for the presentation applications to Query.

The data is extracted from the Raw Database according to a configured range (or format) of DataSourceID's for use by the particular Extractor processes.

When the data is extracted from the Raw Database, the format of the field can be defined more specifically e.g. a number field for the Readings, a fixed length field for the Reference (from the DataSourceID).

### Static or Standing Database

The data used to control the processing of the raw data is obtained from the static or standing database. This contains all of the information required to format the raw data (e.g. the data from a particular DataSourceID is an integer number), interpret the data (e.g. the units of measurement it represents) and process the data (e.g. apply an offset and multiplier).

This database will also contain the "indirect" or supporting data (i.e. not required for actual processing of the transactional data but needed to be available as related data through the front-end) e.g. customer details, commissioning data, etc.

The definitions for Virtual Meters will be stored in the static database.

### Extractor Synchronisation Frequency

Different data may require processing at different frequencies and therefore the synchronisation that is required between the Processed Transactional Data and the Raw database may be different.

e.g. Alarm or Demand data may require processing in a quick response time whereas profile data may only need to be recent to the nearest day.

What this Synchronisation rate needs to be is purely a function of the particular application or solution implemented. This may be constrained by the configuration of the system but is essentially a task defined by the Administrator in line with the Commercial requirements of the application.

The Extractor interface (or process) will ensure that the Synchronisation takes place in accordance with the defined requirement that may be stored in the appropriate static database for that application.

### Maintenance

There is an interface to allow for the maintenance of the transactional data and the static data. This will also allow querying such that basic record maintenance could be performed through a front-end system such as a web site. Defined Administration reports will be available through this interface as defined for the particular application.

### PRESENTATION

A number of different applications or processes will need to Query data from the transactional (or static) databases. These could be for export to another application, for presentation through a front-end or for reporting, etc.

These User Queries are defined according to the particular application requirements and provide the functionality for the front-end.

The presentation applications are designed to be easily and quickly translated into a foreign language.

### METER READING APPLICATION

This section describes the requirements for the Data Processing and Presentation with respect to the Meter Reading system application.

### Data Retrieval

The following transactional data types are supported in the data model:
ALARM
FLOW READING (Change)
CONSUMPTION READING (Accumulated)

Batch data will be initially loaded daily into the Raw Database through the batch interface from the third party system. Other data sources may be loaded at different times e.g. the dynamic interface will load data on an ad-hoc basis.

This raw data will then be synchronised to the Meter Reading system Transactional Database.

When raw data is interpreted and is synchronised with the Meter Reading system Transactional Database, the new data is timestamped. This means that the time that the data took from source (original raw timestamp) to the Extraction model (extraction timestamp) can be recorded. This will be useful for producing system performance statistics and help to set appropriate synchronisation rates for client requirements.

### Data Processing

Virtual Meters will be calculated when the transactional database is synchronised.

The following may be available in the transactional database:
· Alarms with their type and status.
· Flow Profiles for Supply points in the appropriate units.
· Consumption Profiles for Supply points in the appropriate units.

An Alarm Monitoring application will monitor incoming alarm transactional data and notify the appropriate user according to their configured priorities. This application will also generate 'Server' alarms e.g. where historic profiles are compared or profiles are analysed for leakage, etc.

### Static Data Requirements

Figure 7 illustrates the different configurations that may be possible at a site to give an idea of how flexible the maintenance and static database structure are to accommodate the possible installation scenarios.

### Administration Reports

The following is a list of reports that may be produced for administration purposes:
· Number of Meters by Manufacturer
· Number of Meters by Type
· Number of Meters installed by date
· Number of Data Loggers by Manufacturer
· Number of Data Loggers by Type
· Number of Data Loggers installed by date
· Number of Meters by Calibration date
· List of contracts by type
· List of contracts by end date

There may also need to be system statistics reported such as:
· Time taken for a Synchronisation
· Average time (and deviation) for data from source to transactional destination
· Number of data loads
· Exception Reports
· Size of database (in relation to available size)
· Last archive date, etc.

### Maintenance

Different levels of maintenance data can be accessed by different levels of users. e.g. User's level (e.g. Utility, Landlord, Consumer).

### Presentation - Web Queries

The following Queries are supported:
1. Graphical Plots to view profile data. Multiple plots can be viewed on the same chart (the source of these could be a list of Supply points). The plots can be either consumption (or "index") or flow plots and for variable time periods.
   Different time intervals for these plots can be selected, e.g. hourly, daily, weekly, monthly.
   This data can be exported and displayed in tabular form.
2. Demand (absolute) readings can be displayed that give the most recent meter reading (the "index') refreshed periodically.
3. Access to the data is defined at differing "ownership"
   levels and, therefore, user account details (for logon authorisation) are held in a database. For example a utility provider such as a water company will have different access authorisations than a customer of that utility provider.
   Each level has access to all of the Supply points beneath it.
   A log-on screen (or web page) will allow the user to be authorised. This will be the entry point into the metering part of the system.
   Different fields will be available through the maintenance interface to different levels of users. The fields that each level has access to (no access, read only access or read/write access) will be pre-defined.
4. Reports can be generated for each user. These include:
   · List of Supply points and Consumer names, addresses or reference
   · List of collection device serial numbers and system addresses
   · Consumption (table format as well as chart)
   · Standing data for a Supply point or device
   · Bill Estimation (see below)
   · Meters with Specific Alarms e.g. zero flow or abnormal consumption
   · All Alarms
   · List of Communications Made and Number of Logs
5. It will be possible to calculate an estimated bill for a period through the query interface. This will involve calculating the total consumption over that period and multiplies it by an 'average' unit price (defined in the standing data).
6. It will be possible to send simple text messages to users who exist one level up (a single recipient) or one level down (multiple recipients - either BROADCAST all or to named recipients that could be selected from a list). These messages will be treated in the transactional database as Alarms e.g. they can be prioritised, notified to a recipient by other means (e.g. SMS or email, etc.) and they will be included in any alarm Queries. e.g. a Landlord can send a message to the Utility, to All their Consumers or a Selected list.
7. There are various features on the front-end that can be customized (personalised). There is a mechanism to store these preferences as indirect or supporting static data, including:
   · Parameters for the chart that is to be shown in the Main page Plot window.
   · The Host logo, the Utility Logo, the Landlord Logo and the Consumer Logo.
   · Configuration of the Alarm window e.g. alarms of what priority level are shown and
   the notification methods.
8. It will be possible for a user to define a Virtual Meter from the list of authorized meter points. The Virtual Meter may be an addition or subtraction of various meter point profiles. The comparison of profiles done in this way can take into account a time offset e.g. to show a Virtual Meter that is the difference in yesterday's profile to today's. The Virtual Meter formula can also allow a multiplier to be applied to change the unit value into something more meaningful e.g. apply an estimated cost per unit so that the Virtual Meter profile shows the cost of consumption.
   e.g. One Virtual Meter is defined by a Landlord to give the consumption of water with an appropriate water tariff estimate applied, one is the consumption of gas with an appropriate gas tariff estimate applied, and one is the consumption of electricity with an appropriate electricity tariff estimate applied for each of the Landlord's Consumers.
   A Virtual Meter is then defined to give the total Utility usage (Gas + Water + Electricity) for each one of a Landlord's Consumers.
   Another is then defined to give the total Utility usage for all of the Landlord's Consumers.
9. There will be an export mechanism that allows data from Queries to be uploaded to other applications. The interface should include simple tabular exports in TSV or CSV format.
10. The system can be configured to perform estimation and extrapolation of missing data or to "deem" higher frequency intervals. This can be done using standard estimation formula or comparison with historic profiles.

### Utility Applications - Alarm Management

The application software for the utility client may include facilities for 'managing' as well as 'monitoring' alarms.
e.g.
(a) As well as 'hard wired alarms', the server software will allow users to define 'calculated alarms' or 'server generated alarms' expressed as condition/action rules for alarm processing
(b) the actions should include not only 'who to notify and how' but also 'what to do about it' - for example,

```
 IF
 [the cumulative reading at a distribution node]
 Differs from
 [the sum of the cumulative readings at its downstream
 nodes]
 By more than [5 per cent]
 on more than [two] successive occasions
 THEN
 [initiate a timed pair of demand reads on each
 downstream node]
```

## Claims

1. Apparatus (3) for receiving data from a plurality of control or measuring devices (1), comprising, at least one device interface (27) for communication of data between the apparatus (3) and said plurality of devices (1), a central processor (23) for controlling data flow in the apparatus (3), and an input/ output interface (29) for communicating with an external communications network, whereby information from one or more devices (1) can be communicated to a central data distribution server, and wherein said at least one device interface (27), the central processor (23) and the input/output interface (29) are each contained in separate modules occupying addresses in a modular system and each module (23, 27, 29) occupies a data address in a given address range **characterised in that** the central processor (23) is adapted to dynamically allocate addresses to provide virtual slots in a modular system.

2. Apparatus as claimed in claim 1, wherein the devices (1) are selected from the group consisting of utility meters, sensors, valves, storage tanks, environmental control devices, and retail terminals for taking purchase orders.

3. Apparatus as claimed in claim 1 or claim 2, wherein the input/output interface (29) is selected from the group consisting of, a modem, a PSTN or ISDN interface, a GSM interface, or short-range radio or satellite interfaces.

4. Apparatus as claimed in claim 1,2 or 3, wherein the modules communicate via a single bus (35).

5. Apparatus as claimed in any one preceding claim, wherein each module (23, 27, 29) is object orientated and encapsulates the processing and electrical interfaces of the required function.

6. Apparatus as claimed in claim 5, wherein the modules are hot-socketed such that the apparatus does not require to be powered down when adding or removing modules.

7. Apparatus as claimed in any one preceding claim, wherein each device interface (27) has an identification number and said central processor (23) is adapted to identify each device interface (27) and its address in the system by said identification number, whereby device data received by the central processor (23) via a device interface (27) is identified with reference to said identification number.

8. Apparatus as claim in claim 7, wherein each device interface (27) is adapted to identify itself by type of interface module, whereby all data transmitted to the external network is identified by reference to both the module identification number and the interface module type.

9. Apparatus as claimed in any one preceding claim, wherein data output from the apparatus (3) to the external network includes an identification of the apparatus (3) from which it is being sent.

10. Apparatus as claimed in any one preceding claim, wherein the device interface (27) is adapted to interface with a plurality of devices of the same type.

11. A communication system including apparatus for receiving data from a plurality of measuring or control devices (1) as claimed in any one preceding claim and including data processing apparatus (9) connected to the internet (13) or other communications network and in communication thereby with said apparatus (3) for receiving data, the data processing apparatus (9) including a first database for storing information received from said devices, a second database including information identifying a plurality of clients or end users, wherein the data processing apparatus (9) is adapted to manage communication of data to a client from one or more of said devices (1).

12. A communication system as claimed in claim 11, wherein the data processing apparatus (9) is adapted to manage communication of data between a client and a device (1), whereby on the provision of a device identifier by a client or end user, the data processing apparatus (9) is adapted to allow interrogation of the identified device or for data to be passed thereto.

13. A communication system as claimed in claim 12, wherein the data processing apparatus (9) is adapted to manage communication to and from each device (1) by a hierarchical addressing architecture that provides addressing of a device (1) by reference to the device identifier, the identification number of a device interface module (27) and the apparatus (3) comprising said device interface module (27).

14. A communication system as claimed in claim 11, 12 or 13, wherein said data is control data for an actuator or control device (1).

15. A communication system as claimed in any one of claims 11 to 14 and including at least one gateway (5) for allowing communication between said data processing apparatus (9) and said apparatus (3) for receiving data.

## Patentansprüche

1. Vorrichtung (3) zum Empfangen von Daten von einer Vielzahl von Steuerungs- oder Meßgeräten (1), umfassend mindestens eine Geräteschnittstelle (27) zur Datenkommunikation zwischen der Vorrichtung (3) und der Vielzahl von Geräten (1), einen Zentralprozessor (23) zur Steuerung eines Datenflusses in der Vorrichtung (3) und eine Eingabe-/Ausgabeschnittstelle (29) zur Kommunikation mit einem externen Kommunikationsnetzwerk, wodurch Information von einem oder mehreren Geräten (1) an einen zentralen Datenverteilungsserver übermittelt werden kann, und wobei die mindestens eine Geräteschnittstelle (27), der Zentralprozessor (23) und die Eingabe-/Ausgabeschnittstelle (29) jeweils in separaten Modulen enthalten sind, die Adressen in einem modularen System belegen, und jedes Modul (23, 27, 29) eine Datenadresse in einem gegebenen Adreßbereich belegt, **dadurch gekennzeichnet, daß** der Zentralprozessor (23) dafür eingerichtet ist, Adressen dynamisch zuzuweisen, um virtuelle Steckplätze in einem modularen System bereitzustellen.

2. Vorrichtung nach Anspruch 1, wobei die Geräte (1) aus der Gruppe ausgewählt werden, die aus folgendem besteht: Verbrauchszähler, Sensoren, Ventile, Speichertanks, Umweltkontrollgeräte und Einzelhandelsendgeräte zum Entgegennehmen von Kaufbestellungen.

3. Vorrichtung nach Anspruch 1 oder 2, wobei die Eingabe-/Ausgabeschnittstelle (29) aus der Gruppe ausgewählt wird, die aus folgendem besteht: ein Modem, eine PSTN- oder ISDN-Schnittstelle, eine GSM-Schnittstelle oder Kurzstreckenfunk- oder Satellitenschnittstellen.

4. Vorrichtung nach Anspruch 1, 2 oder 3, wobei die Module über einen einzigen Bus (35) kommunizieren.

5. Vorrichtung nach einem der vorhergehenden Ansprüche, wobei jedes Modul (23, 27, 29) objektorientiert ist und die Verarbeitungs- und elektrischen Schnittstellen der erforderlichen Funktion einkapselt.

6. Vorrichtung nach Anspruch 5, wobei die Module bei laufendem Betrieb steckbar sind, so daß die Vorrichtung nicht abgeschaltet werden muß, wenn Module hinzugefügt oder entfernt werden.

7. Vorrichtung nach einem der vorhergehenden Ansprüche, wobei jede Geräteschnittstelle (27) eine Kennzeichnungsnummer hat und der Zentralprozessor (23) dafür eingerichtet ist, jede Geräteschnittstelle (27) und ihre Adresse im System durch die Kennzeichnungsnummer zu identifizieren, wobei Gerätedaten, die durch den Zentralprozessor (23) über eine Geräteschnittstelle (27) empfangen werden, mit Bezug auf die Kennzeichnungsnummer identifiziert werden.

8. Vorrichtung nach Anspruch 7, wobei jede Geräteschnittstelle (27) dafür eingerichtet ist, sich anhand des Typs des Schnittstellenmoduls zu identifizieren, wodurch alle an das externe Netzwerk übertragenen Daten unter Bezugnahme sowohl auf die Modulkennzeichnungsnummer als auch auf den Schnittstellenmodultyp identifiziert werden.

9. Vorrichtung nach einem der vorhergehenden Ansprüche, wobei Daten, die von der Vorrichtung (3) an das externe Netzwerk ausgegeben werden, eine Kennzeichnung der Vorrichtung (3) aufweisen, von der sie gesendet werden.

10. Vorrichtung nach einem der vorhergehenden Ansprüche, wobei die Geräteschnittstelle (27) dafür eingerichtet ist, mit einer Vielzahl von Geräten des gleichen Typs gekoppelt zu werden.

11. Kommunikationssystem, aufweisend eine Vorrichtung zum Empfangen von Daten von einer Vielzahl von Steuerungs- oder Meßgeräten (1) nach einem der vorhergehenden Ansprüche und aufweisend eine Datenverarbeitungsvorrichtung (9), die mit dem Internet (13) oder einem anderen Kommunikationsnetzwerk verbunden und **dadurch** in Kommunikation mit der Vorrichtung (3) zum Empfangen von Daten ist, wobei die Datenverarbeitungsvorrichtung (9) eine erste Datenbank zum Speichern von Information aufweist, die von dem Gerät empfangen wird, wobei eine zweite Datenbank Information aufweist, die eine Vielzahl von Clients oder Endanwendern kenntlich macht, wobei die Datenverarbeitungsvorrichtung (9) dafür eingerichtet ist, Datenkommunikation von einem oder mehreren der Geräte (1) zu einem Client zu verwalten.

12. Kommunikationssystem nach Anspruch 11, wobei die Datenverarbeitungsvorrichtung (9) dafür eingerichtet ist, eine Übermittlung von Daten zwischen einem Client und einem Gerät (1) zu verwalten, wodurch bei der Übergabe einer Gerätekennung durch einen Client oder Endanwender die Datenverarbeitungsvorrichtung (9) dafür eingerichtet ist, eine Abfrage des erkannten Geräts oder die Weiterleitung von Daten dorthin zu ermöglichen.

13. Kommunikationssystem nach Anspruch 12, wobei die Datenverarbeitungsvorrichtung (9) dafür eingerichtet ist, Kommunikation von und zu jedem Gerät (1) durch eine hierarchische Adressierungsarchitektur zu verwalten, die eine Adressierung eines Geräts (1) unter Bezugnahme auf die Gerätekennung, die Kennzeichnungsnummer eines Geräteschnittstellenmoduls (27) und die Vorrichtung (3), die das Geräteschnittstellenmodul (27) umfaßt, ermöglicht.

14. Kommunikationssystem nach Anspruch 11, 12 oder 13, wobei die Daten Steuerungsdaten für ein Stellglied oder Steuerungsgerät (1) sind.

15. Kommunikationssystem nach einem der Ansprüche 11 bis 14 und aufweisend mindestens einen Gateway (5) zur Ermöglichung von Kommunikation zwischen der Datenverarbeitungsvorrichtung (9) und der Vorrichtung (3) zum Empfangen von Daten.

## Revendications

1. Appareil (3) pour recevoir des données en provenance d'une pluralité de dispositifs de commande ou de mesure (1), comprenant au moins une interface de dispositif (27) pour une communication de données entre l'appareil (3) et ladite pluralité de dispositifs (1), un processeur central (23) pour commander un flux de données dans l'appareil (3) et une interface d'entrée/sortie (29) pour communiquer avec un réseau de communication externe et ainsi, une information en provenance d'un ou de plusieurs dispositifs (1) peut être communiquée à un serveur de distribution de données central, et dans lequel ladite au moins une interface de dispositif (27), le processeur central (23) et l'interface d'entrée/sortie (29) sont chacun contenus dans des modules séparés occupant des adresses dans un système modulaire et chaque module (23, 27, 29) occupe une adresse de données dans une plage d'adresses donnée, **caractérisée en ce que** le processeur central (23) est adapté pour allouer dynamiquement des adresses afin de constituer des fenêtres virtuelles dans un système modulaire.

2. Appareil selon la revendication 1, dans lequel les dispositifs (1) sont sélectionnés parmi le groupe comprenant des moyens de mesure à usage général, des capteurs, des vannes, des réservoirs de stockage, des dispositifs de contrôle environnemental et des terminaux de vente au détail pour recevoir des ordres d'achat.

3. Appareil selon la revendication 1 ou 2, dans lequel l'interface d'entrée/sortie (29) est sélectionnée parmi le groupe comprenant un modem, une interface PSTN ou ISDN, une interface GSM ou des interfaces de radio de courte portée ou satellite.

4. Appareil selon la revendication 1, 2 ou 3, dans lequel les modules communiquent via un unique bus (35).

5. Appareil selon l'une quelconque des revendications précédentes, dans lequel chaque module (23, 27, 29) est orienté objet et incorpore les interfaces de traitement et électriques de la fonction requise.

6. Appareil selon la revendication 5, dans lequel les modules sont raccordés sous tension permanente de telle sorte que l'appareil n'a pas besoin d'être coupé lors de l'ajout ou de l'enlèvement de modules.

7. Appareil selon l'une quelconque des revendications précédentes, dans lequel chaque interface de dispositif (27) dispose d'un numéro d'identification et ledit processeur central (23) est adapté pour identifier chaque interface de dispositif (27) et son adresse dans le système au moyen dudit numéro d'identification et ainsi, des données de dispositif reçues par le processeur central (23) via une interface de dispositif (27) sont identifiées par référence audit numéro d'identification.

8. Appareil selon la revendication 7, dans lequel chaque interface de dispositif (27) est adaptée pour s'identifier elle-même au moyen d'un type de module d'interface et ainsi, toutes les données transmises au réseau externe sont identifiées par référence à la fois au numéro d'identification de module et au type de module d'interface.

9. Appareil selon l'une quelconque des revendications précédentes, dans lequel une sortie de données depuis l'appareil (3) jusqu'au réseau externe inclut une identification de l'appareil (3) depuis lequel elle est en train d'être envoyée;

10. Appareil selon l'une quelconque des revendications précédentes, dans lequel l'interface de dispositif (27) est adaptée pour réaliser un interfaçage avec une pluralité de dispositifs du même type.

11. Système de communication incluant un appareil pour recevoir des données en provenance d'une pluralité de dispositifs de commande ou de mesure (1) tel que revendiqué selon l'une quelconque des revendications précédentes et incluant un appareil de traitement de données (9) connecté à l'Internet (13) ou à un autre réseau de communication et en communication ainsi avec ledit appareil (3) pour recevoir des données, l'appareil de traitement de données (9) incluant une première base de données pour stocker une information reçue depuis lesdits dispositifs, une seconde base de données incluant une information identifiant une pluralité de clients ou d'utilisateurs finaux, dans lequel l'appareil de traitement de données est adapté pour gérer une communication de données sur un client depuis un ou plusieurs desdits dispositifs (1).

12. Système de communication selon la revendication 11, dans lequel l'appareil de traitement de données (9) est adapté pour gérer une communication de données entre un client et un dispositif (1) et ainsi, sous réserve de la fourniture d'un identificateur de dispositif par un client ou un utilisateur final, l'appareil de traitement de données (9) est adapté pour permettre l'interrogation du dispositif identifié ou pour permettre que des données lui soient passées.

13. Système de communication selon la revendication 12, dans lequel l'appareil de traitement de données (9) est adapté pour gérer une communication sur et depuis chaque dispositif (1) au moyen d'une architecture d'adressage hiérarchique qui assure un adressage d'un dispositif (1) par référence à l'identificateur de dispositif, au numéro d'identification d'un module d'interface de dispositif (27) et à l'appareil (3) comprenant ledit module d'interface de dispositif (27).

14. Système de communication selon la revendication 11, 12 ou 13, dans lequel lesdites données sont des données de commande pour un dispositif d'actionneur ou de commande (1).

15. Système de communication selon l'une quelconque des revendications 11 à 14 et incluant au moins une passerelle (5) pour permettre une communication entre ledit appareil de traitement de données (9) et ledit appareil (3) pour recevoir des données.
